# EUROPÄISCHE PATENTANMELDUNG

(11) **EP 2 884 746 A1**
(43) Veröffentlichungstag der Anmeldung: **17.06.2015**
(21) Anmeldenummer: 14189027.7
(22) Anmeldetag: 15.10.2014
(51) Int. Cl.: H04N 13/02

(54) **Überwachungskameravorrichtung mit Tiefeninformationsbestimmung**

(30) Priorität: 16.12.2013 DE 102013226101
(71) Anmelder: ROBERT BOSCH GMBH, 70442 Stuttgart (DE)
(72) Erfinder: Meyer, Michael, 31079 Sibbesse (DE); Joecker, Dieter, 90559 Burgthann (DE); Niehsen, Wolfgang, 31162 Bad Salzdetfurth (DE)

(57) **Zusammenfassung**

Übliche Überwachungskameras können stationär angeordnet sein oder auch bewegbar sein. Bekannt sind beispielsweise sogenannte Pan-Tilt-Zoom-Kameras (PTZ-Kameras), welche in der Blickrichtung verändert werden können. Derartige PTZ-Kameras werden beispielsweise eingesetzt, um weiträumige Bereiche mit nur einer einzigen Kamera zu überwachen.

Es wird eine Überwachungskameravorrichtung 1 mit einer Kameraeinrichtung 2 zur Aufnahme von einem Überwachungsbereich 7 mit mindestens einem Objekt 8 aus einer Aufnahmeposition I,II der Kameraeinrichtung 2, mit einer Aktorikeinrichtung 3 zur Änderung der Aufnahmeposition I,II der Kameraeinrichtung 2, mit einer Steuereinrichtung 10 zur Ansteuerung der Aktorikeinrichtung 3 und der Kameraeinrichtung 2, wobei in einer ersten Aufnahmeposition I der Kameraeinrichtung 2 eine erstes Bild 9 und in einer zweiten Aufnahmeposition II der Kameraeinrichtung ein zweites Bild 11 aufnehmbar ist, wobei die Bilder 9,11 mindestens einen gleichen Teilabschnitt mit dem mindestens einem Objekt 8 des Überwachungsbereichs als gemeinsamen Teilabschnitt T zeigen, mit einer Auswerteeinrichtung 12 zur Auswertung der Bilder 9,11 der Kameraeinrichtung 2, wobei die Auswerteeinrichtung 12 ausgebildet ist, aus dem ersten und dem zweiten Bild 9,11 eine Tiefeninformation zu dem mindestens einem Objekt 8 in dem gemeinsamen Teilabschnitt T zu bestimmen.

## Beschreibung

### Stand der Technik

Die Erfindung betrifft eine Überwachungskameravorrichtung mit einer Kameraeinrichtung zur Aufnahme von einem Überwachungsbereich mit mindestens einem Objekt aus einer Aufnahmeposition der Kameraeinrichtung, mit einer Aktorikeinrichtung zur Änderung der Aufnahmeposition der Kameraeinrichtung, mit einer Steuereinrichtung zur Ansteuerung der Aktorikeinrichtung und der Kameraeinrichtung, wobei in einer ersten Aufnahmeposition der Kameraeinrichtung eine erstes Bild und in einer zweiten Aufnahmeposition der Kameraeinrichtung ein zweites Bild aufnehmbar ist, wobei die Bilder mindestens einen gleichen Teilabschnitt mit dem mindestens einem Objekt des Überwachungsbereichs als gemeinsamen Teilabschnitt zeigen, und mit einer Auswerteeinrichtung zur Auswertung der Bilder der Kameraeinrichtung.

Überwachungskameras sind üblicherweise als Schwarz-Weiß- oder Farb-Kameras ausgebildet und werden in zu überwachenden Bereichen verteilt, um dort Videosequenzen oder Einzelbilder von den Bereichen aufzunehmen und zum Beispiel an Überwachungszentralen weiterzuleiten oder für eine spätere Durchsicht zu speichern. Übliche Überwachungskameras können stationär angeordnet sein oder auch bewegbar sein. Bekannt sind beispielsweise sogenannte Pan-Tilt-Zoom-Kameras (PTZ-Kameras), welche in der Blickrichtung verändert werden können. Derartige PTZ-Kameras werden beispielsweise eingesetzt, um weiträumige Bereiche mit nur einer einzigen Kamera zu überwachen.

Die Druckschrift DE 10 2005 057 569 A1, die wohl den nächstkommenden Stand der Technik bildet, offenbart beispielsweise eine Einrichtung zur Überwachung mit mindestens einer Videokamera. Die Videokamera ist auf einer Schwenk- und/oder Neigevorrichtung angeordnet, sodass deren Blickrichtung - in diesem Fall nach einem akustischen Signal - gesteuert ausgerichtet werden kann.

### Offenbarung der Erfindung

Im Rahmen der Erfindung wird eine Überwachungskameravorrichtung mit den Merkmalen des Anspruchs 1 vorgeschlagen. Bevorzugte oder vorteilhafte Ausführungsformen der Erfindung ergeben sich aus den Unteransprüchen, der nachfolgenden Beschreibung sowie den beigefügten Figuren.

Der Erfindungsgegenstand ist eine Überwachungskameravorrichtung, wie diese beispielsweise in einer Videoüberwachungsanlage einsetzbar ist. In derartigen Videoüberwachungsanlagen können eine Vielzahl der Überwachungskameravorrichtungen eingesetzt werden. Beispielsweise sind in der Videoüberwachungsanlage mehr als 10, 30 oder 50 der Überwachungskameravorrichtungen integriert.

Die Überwachungskameravorrichtung umfasst eine Kameraeinrichtung, welche z.B. als eine Schwarz-Weiß- oder als eine Farb-Kamera ausgebildet ist und welche eine Aufnahme eines Bildes oder optional ergänzend einer Bildersequenz ermöglicht. Die Kameraeinrichtung ist zur Aufnahme des Bildes von einem Überwachungsbereich, also einem Bereich in der Umgebung der Kameraeinrichtung, ausgebildet, wobei in dem Überwachungsbereich mindestens ein Objekt angeordnet und/oder anordbar ist. Zur Aufnahme des Überwachungsbereichs befindet sich die Kameraeinrichtung in einer Aufnahmeposition, wobei durch die Aufnahmeposition insbesondere die optische Achse, im speziellen die Blickrichtung der Kameraeinrichtung festgelegt ist.

Die Überwachungskameravorrichtung umfasst ferner eine Aktorikeinrichtung, welche zur Änderung der Aufnahmeposition der Kameraeinrichtung ausgebildet ist. Bei der Aktorikeinrichtung kann es sich um eine eindimensionale Aktorikeinrichtung, wie zum Beispiel eine Schwenkeinrichtung, um eine zweidimensionale Aktorikeinrichtung, wie zum Beispiel eine Schwenk-Neige-Einrichtung oder um eine mehrdimensionale Aktorikeinrichtung handeln. Auch Aktorikeinrichtungen, welche die Änderung der Aufnahmeposition beispielsweise anhand von kartesischen Achsen bewirken oder welche als eine Mischform von Linearachsen und Schwenkachsen ausgebildet sind, sind im Rahmen der Erfindung möglich.

Die Überwachungskameravorrichtung umfasst eine Steuereinrichtung, welche zum einen zur Ansteuerung der Aktorikeinrichtung und zum anderen zur Ansteuerung der Kameraeinrichtung geeignet und/oder ausgebildet ist. Die Steuereinrichtung kann einteilig oder mehrteilig realisiert sein. Die Steuereinrichtung oder Teile davon können zentral, insbesondere integriert in der Überwachungskameravorrichtung angeordnet oder dezentral, insbesondere beabstandet zu der Kameraeinrichtung positioniert sein. Die Steuereinrichtung ermöglicht es, dass die Kameraeinrichtung in eine erste und in eine zweite Aufnahmeposition verfahrbar ist und dort jeweils ein Bild, nachfolgend erstes Bild und zweites Bild genannt, aufgenommen werden kann. Die Bilder können auch Teil einer Bildersequenz sein. Die erste und die zweite Aufnahmeposition sind dabei so gewählt, dass das erste und das zweite Bild mindestens einen gleichen Teilabschnitt des Überwachungsbereichs als gemeinsamen Teilabschnitt zeigen. Insbesondere ist der gleiche oder gemeinsame Teilabschnitt als ein überlappender Teilabschnitt in den Bildern ausgebildet. In dem gemeinsamen Teilabschnitt ist das mindestens eine Objekt angeordnet, wobei in dem verbleibenden Überwachungsbereich weitere Objekte angeordnet sein können.

Ferner umfasst die Überwachungskameravorrichtung eine Auswerteeinrichtung zur Auswertung der Bilder der Kameraeinrichtung. Auch die Auswerteeinrichtung kann zentral oder dezentral angeordnet sein. Die Auswerteeinrichtung kann beispielsweise als eine digitale Datenverarbeitungseinrichtung, insbesondere ein Computer, Mikrokontroller, DSP, mit einem entsprechendem Programm ausgebildet sein.

Im Rahmen der Erfindung wird vorgeschlagen, dass die Auswerteeinrichtung ausgebildet ist, aus dem ersten und dem zweiten Bild eine Tiefeninformation zu dem mindestens einen Objekt in dem gemeinsamen Teilabschnitt zu bestimmen. Die Tiefeninformation kann sich auf einen Objektpunkt des mindestens einen Objekts und damit auf eine Entfernungsbestimmung von der Kameraeinrichtung oder einem anderen Referenzpunkt zu dem Objektpunkt erschöpfen. Alternativ hierzu können für eine Vielzahl von Objektpunkten des mindestens einen Objekts Tiefeninformationen bestimmt werden, sodass sich aus dem Objekt eine dreidimensionale Tiefenbestimmung herleiten lässt. Bei Weiterbildungen der Erfindung kann auch ein 3D-Modell von mehreren Objekten in dem Überwachungsbereich erstellt werden.

Es ist dabei eine Überlegung der Erfindung, dass durch eine Änderung der Aufnahmeposition der Kameraeinrichtung sich zugleich eine Disparität der zu dem Objektpunkt zugeordneten ersten Bildpunkt in dem ersten Bild und dem zweiten Bildpunkt in dem zweiten Bild ergibt. Zusammen mit einem Versatz der Bildebenen des ersten Bilds und des zweiten Bilds relativ zu dem Objekt ist eine Bestimmung einer Tiefeninformation des Objektpunkts möglich.

Üblicherweise wird bei konventionellen Überwachungskameras nur eine zweidimensionale Abbildung des Überwachungsbereichs übermittelt wird, jedoch keinerlei Information über die Tiefe der abgebildeten Überwachungsszene erhalten. Erfindungsgemäß wird jedoch vorgeschlagen, die Tiefeninformation durch die Überwachungskameravorrichtung zu bestimmen, indem Bilder aus unterschiedlichen Aufnahmepositionen der Kameraeinrichtung relativ zu dem mindestens einen Objekt in dem Überwachungsbereich ausgewertet werden. Derartige Auswertealgorithmen sind dem Fachmann beispielsweise mit dem Stichwort "Structure from Motion - SfM" aus der Literatur bekannt.

Bei einer bevorzugten Ausgestaltung der Erfindung ist vorgesehen, dass die erste und die zweite Aufnahmeposition derart ausgebildet sind, dass diesen eine erste und eine dazu versetzte zweite Bildebene zugeordnet werden kann. Es ist vorgesehen, dass ein erster Bildpunkt eines Objektpunkts des Objekts auf der ersten Bildebene zu dem zweiten Bildpunkt des gleichen Objektpunkts auf der zweiten Bildebene eine Disparität aufweist.

Bei einer besonders einfachen und dadurch stabilen bevorzugten Umsetzung der Erfindung ist vorgesehen, dass die optische Achse der Kameraeinrichtung in der ersten Aufnahmeposition um einen Basiswert parallel versetzt zu der optischen Achse der Kameraeinrichtung in der zweiten Kameraposition ist. In dieser Ausbildung ist die Kameraeinrichtung in der ersten und in der zweiten Aufnahmeposition ähnlich wie zwei Augen des Menschen angeordnet und um den Basiswert zueinander versetzt. Gerade in dieser Ausbildung ist eine Vielzahl von Algorithmen bekannt, sodass die Bestimmung der Tiefeninformation besonders einfach und damit stabil umsetzbar ist.

Bei einer bevorzugten konstruktiven Ausgestaltung der Erfindung weist die Überwachungskameravorrichtung ein Gehäuse auf, wobei die Kameraeinrichtung und die Aktorikeinrichtung in dem Gehäuse angeordnet sind. Die Steuereinrichtung und die Auswerteeinrichtung können vollständig oder teilweise in dem Gehäuse angeordnet sein, alternativ sind diese vollständig oder teilweise außerhalb des Gehäuses positioniert. Besonders bevorzugt ist das Gehäuse als ein Domgehäuse ausgebildet, wobei das Domgehäuse einen Grundkörper und eine durchsichtige Kuppel (Dom) aufweist, wobei die Kameraeinrichtung in dem Gehäuse durch die Aktorikeinrichtung bewegbar angeordnet ist und die optischen Achsen durch die durchsichtige Kuppel verlaufen. Insbesondere ist das Gehäuse mit der Aktorikeinrichtung und der Kameraeinrichtung als eine stationär angeordnete Einheit ausgebildet.

Es ist besonders bevorzugt, dass die Überwachungskameravorrichtung als eine Deckenkamera, Wandkamera oder Mastkamera ausgebildet ist. Diese Bauformen für Überwachungskameravorrichtungen haben sich mittlerweile etabliert, wobei Deckenkameras beispielsweise in Kaufhäusern oder Gebäuden verwendet werden, Wandkameras insbesondere bei hohen Häuserwänden in einem mittelhohen Bereich installiert werden und die Mastkameras oft bei freien Geländen zur Überwachung der Umgebung auf Standmasten eingesetzt werden.

Bei einer möglichen Ausgestaltung weist die Aktorikeinrichtung eine motorisierte Linearachse auf, über die die Kameraeinrichtung um den Basiswert verschoben wird, um die beiden Aufnahmepositionen einzunehmen. Insbesondere ist die Bewegungsrichtung der Linearachse senkrecht zu der optischen Achse ausgerichtet. Bei diese Ausgestaltung ist der Basiswert besonders einfach zu ermitteln, da dieser dem Verfahrweg der Linearachse entspricht.

Es ist jedoch konstruktiv bevorzugt, dass die Aktorikeinrichtung eine Hauptschwenkeinrichtung mit einer Hauptschwenkachse und eine Hilfsschwenkeinrichtung mit einer Hilfsschwenkachse aufweist. Hauptschwenkeinrichtung und Hilfsschwenkeinrichtung sind jeweils mindestens als Schwenkeinrichtung ausgebildet, können jedoch auch als Dreheinrichtungen realisiert sein. Die Hauptschwenkachse und die Hilfsschwenkachse sind parallel versetzt zueinander anordbar oder angeordnet. Dadurch, dass die Hauptschwenkachse und die Hilfsschwenkachse parallel versetzt zueinander anordbar sind, können diese die Kameraeinrichtung nicht nur verschwenken, sondern ergänzend parallel zu sich selbst versetzen. Durch den parallelen Versatz ist es möglich, einen oder den Basiswert besonders groß zu gestalten, sodass die Tiefenauflösung und damit die Genauigkeit der Ermittlung der Tiefeninformation verbessert wird.

Es ist dabei besonders bevorzugt, dass Hilfsschwenkeinrichtung, Hauptschwenkeinrichtung und Kameraeinrichtung eine kinematische Kette bilden, wobei die Hilfsschwenkeinrichtung auf der Hauptschwenkeinrichtung und die Kameraeinrichtung auf der Hilfsschwenkeinrichtung angeordnet ist. Bei einer Drehung der Hauptschwenkeinrichtung wird somit die Hilfsschwenkeinrichtung mit der Kameraeinrichtung mit geschwenkt. Bei einer Schwenkung der Hilfsschwenkeinrichtung wird dagegen nur die Kameraeinrichtung geschwenkt, nicht jedoch die Hauptschwenkeinrichtung bewegt. In dieser Ausgestaltung ist es möglich, zunächst über die Hauptschwenkeinrichtung die Kameraposition in eine Zwischenposition zu verfahren und nachfolgend durch die Hilfsschwenkeinrichtung in die zweite Aufnahmeposition zu verfahren, wobei die optische Achse der ersten und der zweiten Aufnahmeposition parallel zueinander angeordnet sind.

Bei einer möglichen konstruktiven Ausgestaltung der Erfindung ist die Hauptschwenkachse außermittig zu der Kameraeinrichtung, insbesondere außermittig zu der Hauptebene eines Objektivs der Kameraeinrichtung und/oder einer Sensorebene eines Bildsensors der Kameraeinrichtung angeordnet. Dagegen ist die Hilfsschwenkachse bevorzugt innerhalb der Kameraeinrichtung angeordnet. Auf diese Weise ist es möglich, über die Hauptschwenkachse die Kameraeinrichtung über eine exzentrische Schwenkbewegung zu versetzen und nachfolgend mit der Hilfsschwenkeinrichtung die Ausrichtung der optischen Achse zu korrigieren.

In einer möglichen konstruktiven Ausgestaltung der Erfindung umfasst die Hauptschwenkeinrichtung eine Grundplatte, welche durch die Hauptschwenkeinrichtung um die Hauptschwenkachse geschwenkt werden kann. Die Hilfsschwenkeinrichtung ist mit der Kameraeinrichtung exzentrisch auf der Grundplatte angeordnet, sodass die Hilfsschwenkachse parallel versetzt zu der Hauptschwenkachse positioniert ist.

Bei einer besonders kostengünstigen Ausführungsform der Erfindung sind die Hauptschwenkeinrichtung und die Hilfsschwenkeinrichtung über einen gemeinsamen Motor miteinander betrieben und/oder über ein Getriebe zueinander zwangsgeführt, wobei die Zwangsführung so ausgebildet ist, dass die Ausrichtung der optischen Achsen in der ersten und in der zweiten Position parallel zueinander ausgerichtet sind. Alternativ werden zwei unterschiedliche Antriebseinrichtungen, insbesondere Motoren eingesetzt.

Bei einer besonders bevorzugten Realisierung der Erfindung ist die Hauptschwenkachse und/oder die Hilfsschwenkachse als eine Pan-Schwenkachse und/oder senkrecht zu einer Bodenplatte oder Montageplatte der Überwachungskameravorrichtung und/oder des Gehäuses ausgebildet. Auf diese Weise erfolgt ein Versatz der optischen Achsen um den Basiswert in horizontaler Richtung, welcher als Querdisparität durch die Bildverarbeitungsalgorithmen besonders einfach zu bearbeiten ist.

Bei einer bevorzugten Ausgestaltung der Erfindung ist die Auswerteeinrichtung programmtechnisch und/oder schaltungstechnisch ausgebildet, die Tiefeninformation auf Basis eines Triangulationsverfahrens beruhend auf dem ersten und dem zweiten Bild sowie die Kenntnis des Basiswerts zwischen den Bildebenen zu bestimmen. Optional ergänzend kann vorgesehen sein, dass die Korrespondenzen der Bildpunkte des Objekts oder der Objektpunkten des Objekts über Methoden des optischen Flusses erfasst werden.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
Figur 1 eine schematische Darstellung einer Überwachungskameravorrichtung in einem Überwachungsbereich als ein Ausführungsbeispiel der Erfindung;
Figur 2a, b die Überwachungskameravorrichtung in der Figur 1 in schematischer Darstellung zur Erläuterung der Funktionsweise der Tiefeninformationsbestimmung.

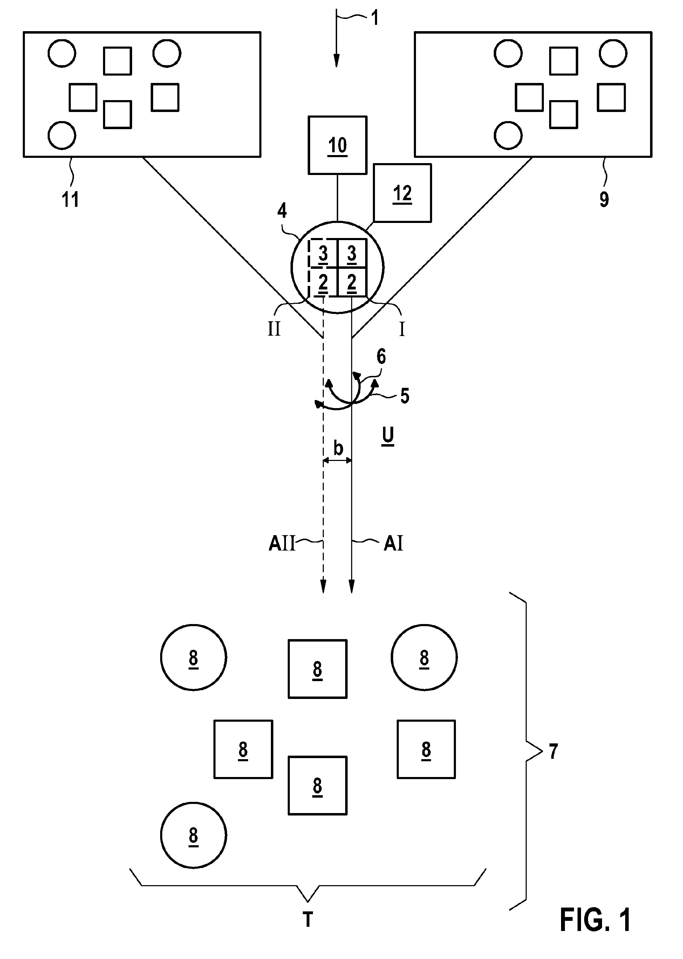

Die Figur 1 zeigt in einer stark schematischen Darstellung eine Überwachungskameravorrichtung 1 als ein Ausführungsbeispiel der Erfindung. Die Überwachungskameravorrichtung 1 weist eine Kameraeinrichtung 2 sowie eine Aktorikeinrichtung 3 auf, welche gemeinsam in einem Gehäuse 4 angeordnet sind. Die Überwachungskameravorrichtung 1 ist beispielsweise als eine sogenannte Domkamera ausgebildet, welche an einer Decke befestigt ist. Die Aktorikeinrichtung 3 ermöglicht es, die Kameraeinrichtung 2 in der Aufnahmeposition relativ zum Gehäuse 4 und/oder relativ zu einer Umgebung U zu bewegen. Beispielsweise kann die Aktorikeinrichtung 3 eine Schwenk- und/oder Neigefunktion umsetzen (Pan-Tilt), wobei die Kameraeinrichtung 2 gemäß dem Pfeil 5 in einer Ebene parallel zu einer Befestigungsebene, wie zum Beispiel einer Wand oder einer Decke, des Gehäuses 4 verschwenkt werden kann oder gemäß Pfeil 6 senkrecht dazu schwenkend geneigt werden kann. Es ist auch möglich, dass die Schwenkungen endlos durchgeführt werden können, sodass es sich um Drehungen handelt.

Die Überwachungskameravorrichtung 1, insbesondere die Kameraeinrichtung 2, ist auf einen Überwachungsbereich 7 gerichtet, in dem eine Mehrzahl von Objekten 8, wie zum Beispiel Schränke, Tische, Autos, etc. angeordnet sind. In einer ersten Kameraposition I wird der Überwachungsbereich 7 mit der Kameraeinrichtung 2 erfasst und ein erstes Bild 9 von der Kameraeinrichtung ausgegeben.

Die Überwachungskameravorrichtung 1 umfasst eine Steuereinrichtung 10 zur Ansteuerung der Aktorikeinrichtung 3 und der Kameraeinrichtung 2. Die Steuereinrichtung 10 steuert die Aktorikeinrichtung 3 an, um ausgehend von der ersten Aufnahmeposition I in eine zweite Aufnahmeposition II zu verfahren und in der zweiten Aufnahmeposition II ein zweites Bild 11 aufzunehmen.

Die erste und die zweite Aufnahmeposition I, II sind so gewählt, dass die optischen Achsen AI, All der Kameraeinrichtung 2 um einen Basiswert b parallel versetzt zueinander angeordnet sind. Durch den Parallelversatz um den Basiswert b wird erreicht, dass durch die Überwachungskameravorrichtung 1 ein stereoskopisches Sehen ermöglicht wird und aus dem ersten Bild 9 und dem zweiten Bild 11 in gemeinsamer Auswertung Tiefeninformationen hinsichtlich der Objekte 8 abgeleitet werden können. Die Ableitung der Tiefeninformationen basiert auf der Triangulation, wobei nach bekannten Formeln in Abhängigkeit des Basiswerts b und der Abweichung der Position der Bildpunkte der Objekte 8' in den Bildern 9, 11 zueinander die Tiefeninformationen bestimmt werden können.

In Kenntnis des Basiswerts b und der Kameraparameter der Kameraeinrichtung 2 ist eine Entfernung zwischen der Kameraeinrichtung 2 und den Objektpunkten der Objekte 8, welche zu den Bildpunkten der abgebildeten Objekte 8' gehören, als Tiefeninformation ermittelbar. Bei der Überführung von der Aufnahmeposition I in die Aufnahmeposition II muss allerdings mindestens ein Teilabschnitt des Überwachungsbereichs 7 als gemeinsamer Teilabschnitt (T) auf beiden Bildern 9, 11 dargestellt sein, da ansonsten keine Korrespondenzen zwischen den Bildern 9, 11 hergestellt werden können. Es ist möglich, dass die Korrespondenzen der Bildpunkte zueinander mit Methoden des optischen Flusses berechnet werden, auch andere bekannte Methoden zur Lösung des Korrespondenzproblems sind möglich. Die Berechnung der Tiefeninformation auf Basis der Triangulation erfolgt in einer Auswerteeinrichtung 12. In der Auswerteeinrichtung 12 kann die Tiefeninformation, insbesondere der Abstand zu einem einzelnen Objektpunkt berechnet werden. Dies kann vorteilhaft eingesetzt werden, um z.B. die Kameraeinrichtung 2 auf den Objektpunkt oder auf einen Tiefenbereich um den Objektpunkt zu fokussieren. Alternativ dazu kann die Auswerteeinrichtung 12 ein 3D-Modell des Überwachungsbereichs 7 aufbauen. Dies kann vorteilhaft eingesetzt werden, um z.B. die Qualität von Bildverarbeitungsalgorithmen, insbesondere für eine Video Content Analysis oder um dem Benutzer die Erstellung eines Lageplans zu erleichtern.

Konstruktiv betrachtet können die Steuereinrichtung 10 und die Auswerteeinrichtung 12 auch in dem Gehäuse 4 angeordnet sein, sodass dieses als eine funktionsfähige Baueinheit z.B. in einem Gebäude integrierbar ist. Alternativ hierzu können die Steuereinrichtung 10 und die Auswerteeinrichtung 12 auch dezentral angeordnet sein. Auch Mischformen sind möglich, sodass zum Beispiel die Steuereinrichtung 10 in dem Gehäuse 4 und die Auswerteeinrichtung 12 dezentral angeordnet ist.

In der Überwachungskameravorrichtung in der Figur 1 ist es beispielsweise möglich, dass die Aktorikeinrichtung 3 zur Schwenkung der Kameraeinrichtung 2 um eine Schwenkachse, welche senkrecht zu der Bildebene steht, ausgebildet ist. Der Parallelversatz der Blickrichtungen zwischen der ersten Aufnahmeposition I und der zweiten Aufnahmeposition II kann beispielsweise durch eine Linearachse als Teil der Aktoreinrichtung 3 umgesetzt werden, welche senkrecht zu den optischen Achsen ausgerichtet ist.

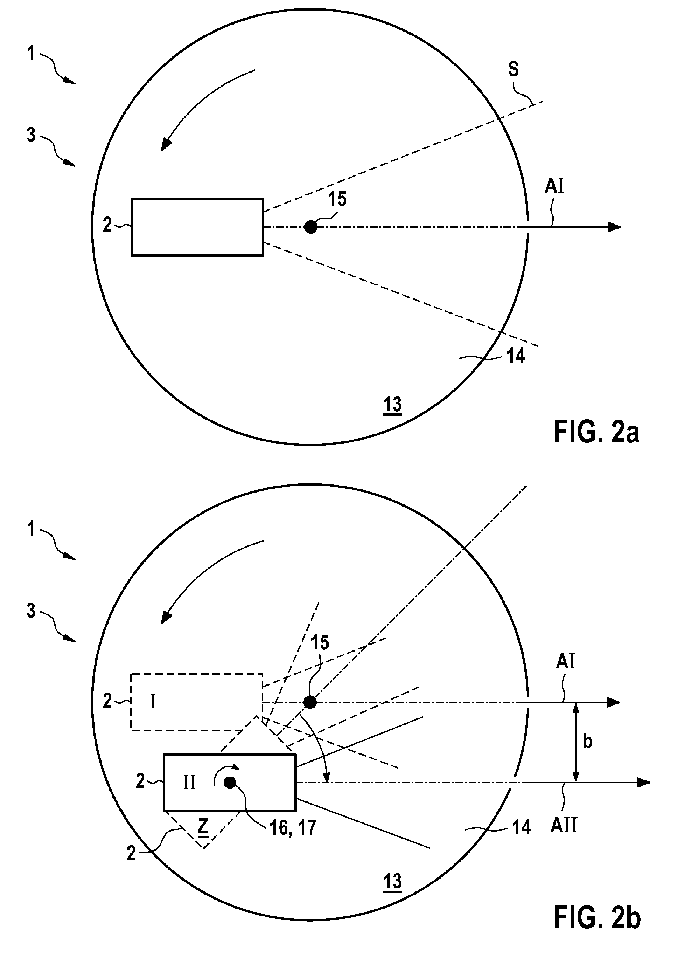

Die Figuren 2a, b zeigen die Überwachungskameravorrichtung 1 mit einer anderen Aktorikeinrichtung 3 in einer schematischen Draufsicht von oben, wobei die Kameraeinrichtung 2 mit ihrem Sichtfeld S und den optischen Achsen AI und All (Figur 2b) gezeigt ist.

Die Kameraeinrichtung 2 ist auf der Aktoreinrichtung 3 angeordnet, welche bei diesem Ausführungsbeispiel eine schwenkbare Grundplatte 13 als eine Hauptschwenkeinrichtung 14 aufweist, die um eine Hauptschwenkachse 15 geschwenkt werden kann. In der Figur 2b ist die um die Hauptschwenkachse 15 geschwenkte Kameraeinrichtung 2 mit gestrichelten Linien dargestellt, wobei zunächst die Kameraeinrichtung 2 von der ersten Aufnahmeposition I in eine Zwischenaufnahmeposition Z durch Schwenkung um die Hauptschwenkachse 15 überführt wird. Zudem weist die Aktoreinrichtung 3 eine Hilfsschwenkeinrichtung 16 auf, welche eine Schwenkung der Kameraeinrichtung 2 um eine Hilfsschwenkachse 17 ermöglicht. Bei einer zusätzlichen Schwenkung der Kameraeinrichtung 2 um die Hilfsschwenkachse 17 wird die Kameraeinrichtung 2 in die Aufnahmeposition II überführt, wobei die optische Achse All um den Basiswert b parallel zu der optischen Achse AI ist. Die Hilfsschwenkachse 17 geht durch die Kameraeinrichtung 2. Dagegen ist die Kameraeinrichtung 2 außermittig oder exzentrisch zu der Hauptschwenkachse 15 angeordnet.

Bei einer konstruktiven Umsetzung ist es möglich, dass die Hauptschwenkeinrichtung 14 und die Hilfsschwenkeinrichtung 16 über einen gemeinsamen Motor bewegt werden oder dass die Hilfsschwenkeinrichtung 16 als ein Schrittmotor oder als ein geeignetes kuppelbares Getriebe ausgebildet ist, welches die Schwenkung der Hauptschwenkeinrichtung 14, insbesondere der Grundplatte 13, auf die Kameraeinrichtung überträgt.
- 1: Überwachungskameravorrichtung
- 2: Kameraeinrichtung
- 3: Aktorikeinrichtung
- 4: Gehäuse
- 5: Pfeil
- 6: Pfeil
- 7: Überwachungsbereich
- 8: Objekte
- 9: erstes Bild
- 10: Steuereinrichtung
- 11: zweites Bild
- 12: Auswerteeinrichtung
- 13: Grundplatte
- 14: Hauptschwenkeinrichtung
- 15: Hauptschwenkachse
- 16: Hilfsschwenkeinrichtung
- 17: Hilfsschwenkachse

- I: erste Kameraposition/Aufnahmeposition
- II: zweite Aufnahmeposition
- b: Basiswert
- S: Sichtfeld
- U: Umgebung
- Z: Zwischenaufnahmeposition

## Patentansprüche

1. Überwachungskameravorrichtung (1)
mit einer Kameraeinrichtung (2) zur Aufnahme von einem Überwachungsbereich (7) mit mindestens einem Objekt (8) aus einer Aufnahmeposition (I,II) der Kameraeinrichtung (2),
mit einer Aktorikeinrichtung (3) zur Änderung der Aufnahmeposition (I,II) der Kameraeinrichtung (2),
mit einer Steuereinrichtung (10) zur Ansteuerung der Aktorikeinrichtung (3) und der Kameraeinrichtung (2), wobei in einer ersten Aufnahmeposition (I) der Kameraeinrichtung (2) eine erstes Bild (9) und in einer zweiten Aufnahmeposition (II) der Kameraeinrichtung ein zweites Bild (11) aufnehmbar ist, wobei die Bilder (9,11) mindestens einen gleichen Teilabschnitt mit dem mindestens einem Objekt (8) des Überwachungsbereichs als gemeinsamen Teilabschnitt (T) zeigen,
mit einer Auswerteeinrichtung (12) zur Auswertung der Bilder (9,11) der Kameraeinrichtung (2),
**dadurch gekennzeichnet,**
**dass** die Auswerteeinrichtung (12) ausgebildet ist, aus dem ersten und dem zweiten Bild (9,11) eine Tiefeninformation zu dem mindestens einem Objekt (8) in dem gemeinsamen Teilabschnitt (T) zu bestimmen.

2. Überwachungskameravorrichtung (1) nach Anspruch 1, **dadurch gekennzeichnet, dass** die erste und die zweite Aufnahmeposition (I, II) ausgebildet sind, für einen gleichen Objektpunkt des mindestens einen Objekts (8) eine Disparität der Bildpunkte des Objektpunkts auf der der ersten Aufnahmeposition (I) zugeordneten ersten Bildebene und der der zweiten Aufnahmeposition (II) zugeordneten zweiten Bildebene zu erzeugen.

3. Überwachungskameravorrichtung (1) nach Anspruch 1 oder 2, **dadurch gekennzeichnet, dass** die optische Achse (AI) der Kameraeinrichtung (2) in der ersten Aufnahmeposition (I) um einen Basiswert b parallel versetzt zu der optischen Achse (AII) der Kameraausrichtung (2) in der zweiten Aufnahmeposition (II) ist.

4. Überwachungskameravorrichtung (1) nach einem der vorhergehenden Ansprüche, **gekennzeichnet durch** ein Gehäuse (4), wobei die Kameraeinrichtung (2) und die Aktorikeinrichtung (3) in dem Gehäuse (4) angeordnet sind.

5. Überwachungskameravorrichtung (1) nach einem der vorhergehenden Ansprüche, **dadurch gekennzeichnet, dass** die Überwachungskameravorrichtung (1) als eine Deckenkamera, Wandkamera oder Mastkamera ausgebildet ist.

6. Überwachungskameravorrichtung (1) nach einem der vorhergehenden Ansprüche, **dadurch gekennzeichnet, dass** die Aktorikeinrichtung (3) eine Hauptschwenkeinrichtung (14) mit einer Hauptschwenkachse (15) aufweist und dass die Aktorikeinrichtung (3) eine Hilfsschwenkeinrichtung (16) mit einer Hilfsschwenkachse (17) aufweist, wobei die Hauptschwenkachse (15) und die Hilfsschwenkachse (17) parallel versetzt zueinander anordbar sind.

7. Überwachungskameravorrichtung (1) nach Anspruch 6, **dadurch gekennzeichnet, dass** die Hilfsschwenkeinrichtung (16) auf der Hauptschwenkeinrichtung (14) und die Kameraeinrichtung (2) auf der Hilfsschwenkeinrichtung (16) angeordnet ist.

8. Überwachungskameravorrichtung nach Anspruch 6 oder 7, **dadurch gekennzeichnet, dass** die Hauptschwenkachse (15) außermittig zu der Kameraeinrichtung (2) angeordnet ist und dass die Hilfsschwenkachse (17) durch die Kameraeinrichtung verläuft.

9. Überwachungskameravorrichtung (1) nach einem der vorhergehenden Ansprüche 6 bis 8, **dadurch gekennzeichnet, dass** die Hauptschwenkeinrichtung (14) zur Schwenkung einer Grundplatte (13) um die Hauptschwenkachse (15) ausgebildet ist, wobei die Hilfsschwenkeinrichtung (16) mit der Kameraeinrichtung (2) exzentrisch zu der Hauptschwenkachse (15) auf der Grundplatte (16) angeordnet ist.

10. Überwachungskameravorrichtung (1) nach Anspruch 9, **dadurch gekennzeichnet, dass** die Hauptschwenkeinrichtung (14) und die Hilfsschwenkeinrichtung (15) über einen gemeinsamen Motor betrieben werden und/oder über ein Getriebe zueinander zwangsgeführt sind.

11. Überwachungskameravorrichtung (1) nach einem der Ansprüche 6 bis 10, **dadurch gekennzeichnet, dass** die Hautschwenkachse (15) und/oder die Hilfsschwenkachse (17) als eine Pan-Schwenkachse und/oder senkrecht zu einer Bodenplatte oder Montageplatte der Überwachungskameravorrichtung (1) ausgebildet ist.

12. Überwachungskameravorrichtung (1) nach einem der vorhergehenden Ansprüche, **dadurch gekennzeichnet, dass** die Auswerteeinrichtung (12) ausgebildet ist, die Tiefeninformation auf Basis eines Triangulationsverfahrens zu ermitteln.
